# EUROPEAN PATENT APPLICATION

(11) **EP 3 661 194 A1**
(43) Date of publication of application: **03.06.2020**
(21) Application number: 18838043.0
(22) Date of filing: 24.07.2018
(51) Int. Cl.: H04N 7/15, H04N 21/4788

(54) **VIDEO INTERACTION MANAGEMENT METHOD AND SYSTEM, AND COMPUTER-READABLE STORAGE MEDIUM**

(30) Priority: 27.07.2017 CN 201710623950
(71) Applicant: ZTE Corporation, Shenzhen, Guangdong 518057 (CN)
(72) Inventor: SU, Dafeng, Shenzhen, Guangdong 518057 (CN)
(74) Representative: Aipex B.V.
(86) International application number: PCT/CN2018/096803
(87) International publication number: WO 2019/020005

(57) **Abstract**

A video interaction management method, a video interaction management system and a computer-readable storage medium. The video interaction management method comprises the steps: a server allocating connection information to a pre-set watching terminal, so that the watching terminal establishes a watching connection with the server through the connection information; and before the watching terminal performs video interaction, the server allocating a media resource for the watching terminal, so that the watching terminal performs video interaction through the media resource.

## Description

### TECHNICAL FIELD

The present disclosure relates to, but is not limited to, the field of a video technology.

### BACKGROUND

A video conference is an audio and video communication system developed under an international telecommunication union telecommunication standardization sector (ITU-T) protocol specification, which has adopted audio and video coding algorithms of H.264/H.265, G series (including G.711, G.729, G.722 and so on), advanced audio coding (AAC) and etc.. During a video conference, a micro controller unit (MCU) allocates a certain media resource (an audio and video coding resource) to each participant user, so as to realize a bidirectional real-time audio and video and document interaction between participants of the video conference. Therefore, a huge amount of media resources will be consumed for a super-large capacity conference (with a number of participants over 2000), and a huge amount of audio/video streams access into the MCU, which results in a complex processing logic of the MCU and affects audio and video quality of the conference in the end. In addition, a conventional video conference solution needs through an application (APP) to join a conference, which may not satisfy requirements that a user joins in the conference without perception (i.e., the user directly joins in the conference without installation of the APP when browsing information).

A live video broadcast pushes an audio and video content unidirectionally to users using an Internet technology and a stream media technology, usually an HTTP live stream (HLS, a streaming medium based on HTTP) protocol, an HTTP flash video (HTTP-FLV, FLV stream medium based on HTTP) protocol or a real time messaging protocol (RTMP) is introduced, users do not need professional and expensive video terminals, they may view the audio and video content in real time through a browser or browsers embedded in various social APPs, which is very similar to a live news broadcast on a broadcast television network. The live video broadcast is very beneficial to promotion of an audio and video content, if the audio and video content is a video conference, a large number of audio and video streams may be prevented from accessing into the MCU, however, the live video broadcast may only be used for a unidirectional communication, and users are unable to participate and interact.

### SUMMARY

Embodiments of the present disclosure provide a video interaction management method, the method includes steps described below. A server allocates connection information for a preset view terminal so that the view terminal establishes a view connection with the server through the connection information; and the server allocates a media resource for the view terminal before the view terminal performs a video interaction so that the view terminal performs the video interaction through the media resource.

The embodiments of the present disclosure further provide a video interaction management system, the system includes a processor and a memory. The processor executes a program stored in the memory, the program includes executable instructions, to implement the video interaction management method according to the embodiments of the present disclosure.

The embodiments of the present disclosure further provide a computer-readable storage medium, the computer-readable storage medium stores at least one program including executable instructions, the at least one program is executed by a computer to implement the video interaction management method according to the embodiments of the present disclosure.

### BRIEF DESCRIPTION OF DRAWINGS

FIG. 1 is a flowchart of a video interaction management method according to an embodiment of the present disclosure;
FIG. 2 is another flowchart of a video interaction management method according to an embodiment of the present disclosure;
FIG. 3 is a schematic structural diagram of a video interaction management system according to an embodiment of the present disclosure.

### DETAILED DESCRIPTION

In order to better understand technical solutions and functions of the present disclosure, following detailed descriptions of the technical solutions of the present disclosure are provided in combination with the accompanying drawings and embodiments.

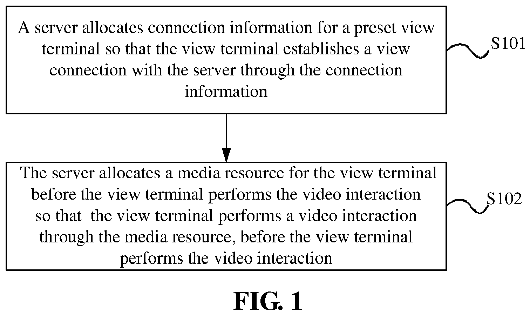

FIG. 1 shows a flowchart of a video interaction management method according to an embodiment of the present disclosure. As shown in FIG. 1, the video interaction management method may include step S101 and step S102 described below.

Step S101, a server allocates connection information for a preset view terminal so that the view terminal establishes a view connection with the server through the connection information.

In some embodiments, the server allocates the connection information to the preset view terminal, so that the view terminal establishes the view connection with the server through the connection information in a web real-time communication (WebRTC) browser.

The connection information includes, but is not limited to, a video link.

Step S102, during a time in which the server transmits a video to the view terminal, the server allocates a media resource for the view terminal before a view terminal performs the video interaction so that the view terminal performs the video interaction through the media resource. The media resource includes, but is not limited to, a resource that is provided by the server for encoding and decoding services for the received audio and/or video transmitted from the view terminal to other terminal, and/or a resource that is provided by the server for encoding and decoding services for the audio and/or video transmitted to the view terminal.

In some embodiments, in condition that the server transmits the video to the view terminal, when the view terminal transmits a video interaction application to the server, the server approves the video interaction application according to a preset approval model or user control; in condition that the video interaction application is approved by the server, the server allocates the media resource for the view terminal so as to perform the video interaction through the media resource. In some embodiments, in condition that the server transmits the video to the view terminal, when a user controls the server to select the view terminal for performing the video interaction, the server transmits a video interaction invitation to the view terminal; and in condition that the video interaction invitation is accepted by the view terminal, the server allocates the media resource for the view terminal so as to perform the video interaction through the media resource. The video interaction includes at least one of following manners: transmitting an audio and/or video file to other terminal, transmitting a real-time audio and/or video to other terminal, transmitting other file to other terminal, receiving an audio and/or video file transmitted by other terminal, receiving a real-time audio and/or video transmitted by other terminal, receiving other file transmitted by other terminal, and so on.

The video interaction management method according to the embodiments of the present disclosure enables that multiple terminals may participate in an interaction, a utilization rate of an audio and video coding capacity of the server is improved, a video interaction effect of the view terminal is ensured, the control solution of the server with multiple terminals participating in the interaction is simplified at the same time, and reliability of the server with multiple terminals participating in the interaction is improved finally.

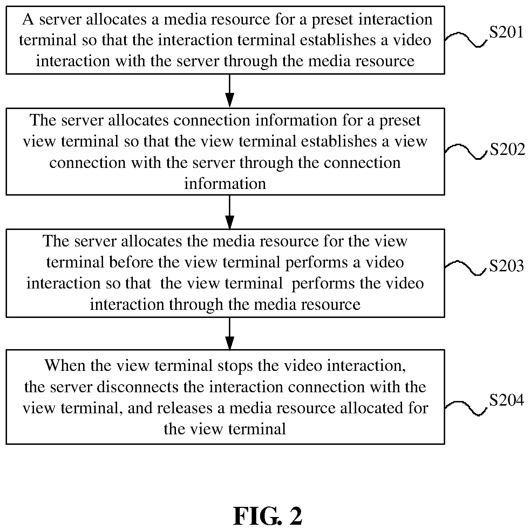

FIG. 2 shows another flowchart of a video interaction management method according to an embodiment of the present disclosure. As shown in FIG. 2, the video interaction management method may include step S201 to step S204 described below.

Step S201, a server allocates a media resource for a preset interaction terminal so that the interaction terminal establishes a video connection with the server through the media resource.

In some embodiments, the server allocates the media resource for the preset interaction terminal, so that the interaction terminal establishes an interaction connection with the server through the media resource, as well as performs the video interaction with other terminal through the interaction connection.

The media resource includes, but is not limited to, a resource that is provided by the server for encoding and decoding services for the received audio/video transmitted from the view terminal to other terminal, and/or a resource that is provided by the server for encoding and decoding services for the audio/video transmitted to the view terminal.

The video interaction at least includes one of following manners: transmitting an audio and/or video file to other terminal, transmitting a real-time audio and/or video to other terminal, transmitting other file to other terminal, receiving an audio and/or video file transmitted by other terminal, receiving a real-time audio and/or video transmitted by other terminal, receiving other file transmitted by other terminal, and so on.

Step S202, the server allocates connection information for a preset view terminal so that the view terminal establishes a view connection with the server through the connection information.

In some embodiments, the server allocates the connection information to the preset view terminal, so that the view terminal establishes the view connection with the server through the connection information in the WebRTC browser.

The WebRTC supports the technology for performing a real-time voice video call through a web browser. An audio and video processing engine is embedded in a browser conforming to the WebRTC specification, and supports a VP8/VP9 codec, an Internet low bitrate codec (iLBC), an Internet speech audio codec (iSAC), and an interactive connectivity establishment (ICE), the engine may provide rich application programming interfaces (APIs), which may satisfy requirements of various application scenes, for example, conference control requirements of the video conference. However, an audio and video stream of the WebRTC specification may not interface with a conventional video conference system (mainly due to differences of audio and video engine algorithms), which affects development of the WebRTC specification in the video conference scene.

The connection information includes, but is not limited to, a video link.

Step S203, during a time in which the server transmits a video to the view terminal, the server allocates a media resource for the view terminal before the view terminal performs a video interaction so that the view terminal performs the video interaction through the media resource. The media resource includes, but is not limited to, a resource that is provided by the server for encoding and decoding services for the received audio and video transmitted from the view terminal to other terminal, and/or a resource that is provided by the server for encoding and decoding services for the audio and/or video transmitted to the view terminal.

In some embodiments, in condition that the server transmits the video to the view terminal, when the view terminal transmits a video interaction application to the server, the server approves the video interaction application according to a preset approval model and user control; and in condition that the server approves the video interaction application, the server allocates the media resource for the view terminal so that the view terminal performs the video interaction through the media resource.

In some embodiments, in condition that the server transmits the video to the view terminal, when the view terminal transmits a video interaction application to the server, it is determined whether the view terminal is within a preset range of terminals capable of applying for an interaction; if the view terminal is within the preset range of terminals capable applying for an interaction, the server approves the video interaction application according to the preset approval model or user control, in condition that the server approves the video interaction application, the server allocates the media resource for the view terminal so as to perform the video interaction through the media resource; and the view terminal is forbidden to perform the video interaction, if the view terminal is not within the preset range of terminals capable of applying for an interaction, i.e., the video interaction application transmitted by the view terminal is not approved, the server does not allocate the media resource for the view terminal.

In some embodiments, in condition that the server transmits the video to the view terminal, when a user controls the server to select the view terminal for performing the video interaction, the server transmits a video interaction invitation to the view terminal; and in condition that the video interaction invitation is accepted by the view terminal, the server allocates the media resource for the view terminal so that the view terminal performs the video interaction through the media resource.

In some embodiments, the server allocates the media resource for the view terminal while stops to transmit the video to the view terminal, disconnects the view connection with the view terminal, and establishes the interaction connection with the view terminal through the media resource so that the view terminal perform the video interaction with other terminal through the interaction connection.

The video interaction at least includes one of following manners: transmitting an audio and/or video file to other terminal, transmitting a real-time audio and/or video to other terminal, transmitting other file to other terminal, receiving an audio and/or video file transmitted by other terminal, receiving a real-time audio and/or video transmitted by other terminal, receiving other file transmitted by other terminal, and so on.

Step S204, when the view terminal ends the video interaction, the server disconnects the interaction connection with the view terminal, and releases a media resource allocated for the view terminal.

And if the view terminal applies for termination of the video interaction to the server or the server terminates the video interaction of the view terminal, then the view terminal ends the video interaction.

The video interaction management method according to the embodiments of the present disclosure enables that multiple terminals may participate in an interaction, a utilization rate of an audio and video coding capacity of the server is improved, a video interaction effect of the view terminal is ensured, the control solution of the server with multiple terminals participating in the interaction is simplified at the same time, and reliability of the server with multiple terminals participating in the interaction is improved finally.

An application example of the video interaction management method according to the embodiments of the present disclosure is described in detail below.

The video interaction management method according to the application example includes step S301 to step S311 described below.

Step S301, a conference administrator divides participant terminals into interaction terminals and view terminals according to conference requirements.

The interaction terminals may speak at any time, namely participate in an interaction at any time, which are usually conference main speakers or important participants with a relatively small number. The view terminals by default only receive a conference video, which are usually conference listeners with a relatively large number.

Step S302, the server allocates a media resource for each interaction terminal, so that the each interaction terminal may establish a connection with the server through the media resource, therefore to perform a video interaction.

Step S303, the server transmits a view conference link to the each view terminal, so that the each view terminal establishes an HLS and/or HTTP-FLV connection with the server through the view conference link in the WebRTC browser.

Step S304, when the each view terminal establishes the HLS and/or HTTP-FLV connection with the server, the server transmits a conference video to the each view terminal so as to view the conference video.

Step S305, when a user of a view terminal (e.g., a view terminal B1) has a viewpoint for a video conference content needed to be proposed, the user of the view terminal B1 controls the view terminal B1 to transmit a video interaction application to the server.

Step S306, the server transmits relevant information of the video interaction application (identification information of the view terminal B1, identification information of the video conference, a media resource occupation status of the video conference, etc.) to the conference administrator.

Step S307, the conference administrator approves the video interaction application transmitted by the view terminal B1 according to the relevant information of the video interaction application, allocates a media resource in a preset dynamic media resource library for the view terminal B1, and transmits conference interaction information (e.g., the identification information of the video conference and a video conference password) to the view terminal B1. Step S308, the view terminal B1 disconnects the HLS and/or HTTP-FLV connection established with the server, and establishes an interaction connection with the server according to the received conference interaction information (e.g., the identification information of the video conference and a video conference password), thereby the video interaction is performed.

Step S309, after the view terminal B1 ends the video interaction, the server disconnects the interaction connection with the view terminal B1.

Step S310, the server releases the media resource allocated for the view terminal B1 and disconnects a media link.

Step S311, the view terminal B1 establishes an HLS and/or HTTP-FLV connection with the server again, the server transmits the conference video to the view terminal B1 so as to view the conference video.

Another application example of the video interaction management method according to the embodiments of the present disclosure is described in detail below.

The video interaction management method according to the above application example includes step S401 to step S410 described below.

Step S401, a conference administrator divides participant terminals into interaction terminals and view terminals according to conference requirements.

The interaction terminals may speak at any time, namely participate in an interaction at any time, which are usually conference main speakers or important participants with a relatively small number. The view terminals by default only receive a conference video, which are usually conference listeners with a relatively large number.

Step S402, the server allocates a media resource for each interaction terminal, so that the each interaction terminal may establish a connection with the server through the media resource, therefore a video interaction is performed.

Step S403, the server transmits a view conference link to the each view terminal, so that the each view terminal establishes an HLS and/or HTTP-FLV connection with the server through the view conference link in the WebRTC browser.

Step S404, when the each view terminal establishes the HLS and/or HTTP-FLV connection with the server, the server transmits a conference video to the each view terminal so as to view the conference video.

Step S405, when the conference administrator selects a user of a view terminal (e.g., a view terminal B1) to participate in a discussion in the video conference, the server transmits a video interaction invitation and conference interaction information (e.g., identification information of the video conference and a video conference password) to the view terminal B1.

Step S406, when the view terminal B1 accepts the video interaction invitation, the server allocates a media resource in a preset dynamic media resource library for the view terminal B1.

Step S407, the view terminal B1 disconnects the HLS and/or HTTP-FLV connection established with the server, and establishes an interaction connection with the server according to the received conference interaction information (e.g., the identification information of the video conference and the video conference password), thereby the video interaction is performed.

Due to differences in media stream standards between the view terminal B1 and the server, the server may convert an iLBC/iSAC format of the view terminal B1 into a G series /AAC format, or convert a VP8/VP9 format of the view terminal B1 into an H.264/H.265 format.

Step S408, after the view terminal B1 ends the video interaction, the server disconnects the interaction connection with the view terminal B1.

Step S409, the server releases the media resource allocated for the view terminal B1 and disconnects a media link.

Step S410, the view terminal B1 establishes an HLS and/or HTTP-FLV connection with the server again, and the server transmits the conference video to the view terminal B 1 so as to view the conference video.

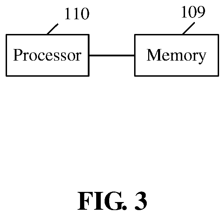

The embodiments of the present disclosure further provide a video interaction management system, as shown in FIG. 3, the video interaction management system includes a processor 110 and a memory 109.

The processor 110 and the memory 109 may be connected, for example, through a bus or other means.

The processor 110 may be a general-purpose processor, such as, a central processing unit (CPU), a digital signal processor (DSP), and an application specific integrated circuit (ASIC). The memory 109 stores a program including executable instructions, the program is executed by the processor 110 to implement the video interaction management method according to the embodiments of the present disclosure.

The memory 109 may include a volatile memory, such as a random access memory (RAM), a non-volatile memory, such as a read-only memory (ROM), a flash memory, a hard disk drive (HDD) or a solid-state drive (SSD), etc.. Of course, the memory 109 may also include a combination of the above described various memories.

The video interaction management system according to the embodiments of the present disclosure enables multiple terminals to participate in an interaction, so as to improve the utilization rate of the audio/video encoding/decoding capability of the server, and ensure the video interaction effect of the view terminals, the control solution of the server with multiple terminals participating in the interaction is simplified at the same time, and the reliability of the server with multiple terminals participating in the interaction is improved finally.

The embodiments of the present disclosure further provide a computer-readable storage medium. The computer storage medium may be a RAM memory, a flash memory, a ROM memory, an EPROM memory, a register, a hard disk, a removable hard disk, a CD-ROM, or any other form of storage media.

The computer-readable storage medium stores at least one program including executable instructions, the at least one program is executed by, for example, a computer, to implement the video interaction management method according to the embodiments of the present disclosure. The at least one program stored in the computer-readable storage medium according to the embodiments of the present disclosure is executed, so that multiple terminals can participate in an interaction, the utilization rate of the audio/video encoding/decoding capability of the server is improved, the video interaction effect of the view terminal is ensured, the control solution of the server with the multiple terminals participating in the interaction is simplified at the same time, and the reliability of the server with the multiple terminals participating in the interaction is improved finally.

It should be understood that the drawings and the described embodiments are for reference and illustration only and are not intended to limit the present disclosure.

## Claims

1. A video interaction management method, comprising:
allocating, by a server, connection information for a preset view terminal so that the view terminal establishes a view connection with the server through the connection information; and
allocating, by the server, a media resource for the view terminal before the view terminal performs a video interaction so that the view terminal performs the video interaction through the media resource.

2. The method according to claim 1, further comprising:
allocating, by the server, a media resource for a preset interaction terminal so that the interaction terminal performs the video interaction through the media resource.

3. The method according to claim 1, wherein establishing, by the view terminal, the view connection with the server through the connection information comprises:
establishing, by the view terminal, the view connection with the server through the connection information in a web real-time communication browser.

4. The method according to claim 1, wherein the allocating, by the server, the media resource for the view terminal before the view terminal performs the video interaction so that the view terminal performs the video interaction through the media resource comprises:
in response to the view terminal transmitting a video interaction application to the server, approving, by the server, the video interaction application according to a preset approval model or user control; and in condition that the video interaction application is approved by the server, allocating, by the server, the media resource for the view terminal so that the view terminal performs the video interaction through the media resource.

5. The method according to claim 1, wherein the allocating, by the server, the media resource for the view terminal before the view terminal performs the video interaction so that the view terminal performs the video interaction through the media resource comprises:
in response to a user controlling the server to select the view terminal for the video interaction, transmitting, by the server, a video interaction invitation to the view terminal; and in condition that the video interaction invitation is accepted by the view terminal, allocating, by the server,
the media resource for the view terminal so that the view terminal performs the video interaction through the media resource.

6. The method according to claim 1, wherein the allocating, by the server, the media resource for the view terminal so that the view terminal performs the video interaction through the media resource comprises:
stopping, by the server, transmission of a video to the view terminal, and disconnecting the view connection with the view terminal; and
allocating, by the server, the media resource for the view terminal, and establishing the interaction connection with the view terminal through the media resource so that the view terminal performs the video interaction through the interaction connection.

7. The method according to claim 6, further comprising:
in response to ending the video interaction by the view terminal, disconnecting, by the server, the interaction connection with the view terminal, and releasing, by the server, a media resource allocated for the view terminal.

8. The method according to claim 7, wherein the ending the video interaction by the view terminal comprises:
applying, by the view terminal, for termination of the video interaction to the server, or terminating, by the server, the video interaction of the view terminal.

9. A video interaction management system, comprising a processor and a memory, wherein the processor is configured to execute a program containing executable instructions stored in the memory to implement the video interaction management method according to any one of claims 1 to 8.

10. A computer-readable storage medium, storing at least one program comprising executable instructions, wherein the program is executed by a computer to implement the video interaction management method according to any one of claims 1 to 8.
